# DEMANDE DE BREVET EUROPEEN

(11) **EP 4 793 111 A1**
(43) Date de publication de la demande: **19.08.2026**
(21) Numéro de dépôt: 25315052.8
(22) Date de dépôt: 17.02.2025
(51) Int. Cl.: B60R 21/2165, B29C 65/62

(54) **STRUCTURE SUPPORT POUR PLANCHE DE BORD**

(71) Demandeur: SMRC Automotive Holdings Netherlands B.V., 1101 BA Amsterdam (NL)
(72) Inventeur: AUTEM, Laurent, 62860 Sains Les Marquion (FR); FORGERON, Jerome, 62220 Carvin (FR); SOUFFLET, Jeremy, 62440 Harnes (FR)
(74) Mandataire: Ipsilon

(57) **Abrégé**

L'invention concerne une structure support (1) pour planche de bord intégrant un volet (2) d'airbag, cette structure étant configurée pour porter un revêtement, caractérisée en ce que le volet comprend :
- un panneau support (21) du revêtement relié au reste de la structure par une charnière (3),
- une paroi de connexion (22) positionnée le long du bord (211) du panneau support opposé à la charnière et configurée pour interagir avec une surface d'épaisseur de la planche de bord positionnée en vis-à-vis et séparer l'épaisseur du revêtement du panneau support de celle du reste de la structure support,
cette paroi comprenant un bord libre (222) configuré pour être en profondeur du revêtement et qui présente une variation de sa hauteur pour réaliser une ouverture (24) au travers de la paroi permettant de positionner une déformation au moins localisée de la couche de revêtement de surface liée à une piqûre.

## Description

La présente invention se rapporte au domaine des planches de bord intégrant un volet d'airbag et plus particulièrement au domaine des planches de bord comprenant un revêtement d'épaisseur importante.

Lors de la construction d'un habitacle de véhicule, les surfaces intérieures de l'habitacle sont classiquement aménagées pour répondre à un certain niveau de confort ou d'esthétisme, en particulier dans le cadre de véhicules familiaux ou de véhicules répondant à des niveaux de standing supérieurs. Ces aménagements consistent notamment en l'application, sur les différentes. parties rigides qui forment la structure solide de l'habitacle, de revêtements dont l'épaisseur et l'élasticité sont suffisantes pour éviter que le toucher des surfaces de l'habitacle ne fasse percevoir une rigidité de la surface intérieure de l'habitacle voire même pour qu'il apporte la sensation d'un revêtement matelassé. L'obtention d'un tel rendu est généralement réalisée par la fixation d'un revêtement comprenant une couche de type mousse élastique sur la surface de la structure solide orientée vers l'intérieur de l'habitacle de sorte que cette structure solide remplit un rôle de support.

Dès lors qu'une partie de la surface intérieure de l'habitacle telle la planche de bord du véhicule, masque une trappe configurée pour l'éjection d'un coussin d'airbag, l'épaisseur de revêtement moussé disposé sur la surface intérieure de l'habitacle est à même de masquer la présence d'une ouverture de canal d'airbag aux passagers du véhicule. De plus, grâce à l'épaisseur élastique de sa structure, le revêtement est en mesure d'absorber les éventuelles variations de reliefs qu'impose une trappe de canal d'airbag sur une planche de bord, de façon à fournir une homogénéité de la surface intérieure de l'habitacle. Toutefois, la présence d'un épais revêtement élastique disposé sur la planche de bord par-dessus l'ouverture des volets d'airbag en extrémité du canal d'éjection, est susceptible de faire obstruction à l'ouverture de ces volets et donc de complexifier la réalisation d'une ouverture effective, voire efficace, de ces volets. En effet, sous l'effort exercé par les volets et le gonflement du coussin d'airbag, le revêtement positionné sur la surface de la structure support est contraint de se déchirer pour permettre le déploiement du coussin d'airbag. Cependant, lorsque le revêtement opère un rendu matelassé, c'est-à-dire présentant également une épaisseur importante, la déchirure est susceptible d'être ralentie voire même de ne pas pouvoir s'opérer, d'une part, sans difficulté et, d'autre part, de façon parfaitement nette de sorte que l'expulsion et le déploiement du coussin d'airbag sont susceptibles de s'en trouver altérés, impactant alors le niveau de sécurité pour les passagers du véhicule.

Par ailleurs, afin de diversifier les variations esthétiques de l'habillage des surfaces intérieures de l'habitacle telles que celle du revêtement de la planche de bord, la surface du revêtement est complétée par des points de piqûres susceptibles d'être disposés ponctuellement ou selon un arrangement de lignes destinées à la réalisation d'un motif de surface. Selon la variante de réalisation, ces points de piqûres sont susceptibles d'être simplement positionnés au niveau de la seule surface du revêtement ou, alternativement, opérer un pincement du revêtement dans son épaisseur. Dans le cadre de cette seconde alternative, grâce à l'élasticité de sa matière, la piqûre modifie le rendu de l'habillage en tirant la surface du revêtement dans la profondeur de son épaisseur de façon à permettre la réalisation d'une invagination de la surface à l'intérieur du revêtement et la formation de capitons. Toutefois, la réalisation d'un tel rendu au niveau de la surface extérieure du revêtement impacte l'arrangement de ce revêtement sur l'ensemble de son épaisseur et donc est susceptible de contraindre à une adaptation de la structure solide qui forme le support de ce revêtement. La distribution de points de piqûres, par exemple régulière selon des alignements, se doit ainsi d'être adaptée pour ne pas entrer en interférence avec un ou plusieurs des reliefs qui seraient présents sur la surface de la structure de support du revêtement en particulier au niveau de l'ouverture du canal d'airbag et seraient nécessaires, voire indispensables, pour la déchirure du revêtement dans le cadre du déploiement du coussin d'airbag.

La présente invention a pour but de pallier ces inconvénients en proposant notamment une solution qui permette la construction d'une surface extérieure de revêtement de planche de bord d'épaisseur élastique réalisant un rendu matelassé et qui comprend une distribution de points de piqûres ou coutures sans que celle-ci n'affecte le déploiement du coussin d'airbag au travers de la planche de bord.

L'invention se rapporte ainsi à une structure support rigide pour planche de bord intégrant au moins un volet d'airbag, cette structure support étant configurée pour porter un revêtement, caractérisée en ce que le au moins un volet d'airbag comprend :
- un panneau support configuré pour porter une partie du revêtement de la planche de bord et relié, directement ou indirectement, au reste de la structure support par au moins un moyen charnière,
- une paroi de connexion positionnée le long d'au moins une portion du bord du panneau support situé à l'opposé du moyen charnière par rapport au panneau support et configurée, d'une part, pour interagir avec une surface d'épaisseur de la planche de bord positionnée en vis-à-vis de la paroi de connexion et, d'autre part, pour opérer une séparation entre une épaisseur du revêtement de la planche de bord porté par le panneau support et une épaisseur du revêtement porté par le reste de la structure support,
le bord de la paroi de connexion opposé au panneau support étant configuré pour être en profondeur par rapport à la surface de la couche de revêtement, la paroi de connexion présente une variation de sa hauteur de sorte que au moins une portion du bord de la paroi de connexion réalise un arrangement formant une ouverture au travers de la paroi de connexion, cette ouverture étant configurée pour y permettre le positionnement d'une déformation au moins localisée de la couche de revêtement de surface de la planche de bord en lien avec une piqûre ou une couture.

L'invention porte également sur une planche de bord intégrant au moins un volet d'airbag, la planche de bord comprenant, d'une part, une structure support rigide selon l'invention et, d'autre part, un revêtement superposé sur cette structure support, le revêtement comprenant au moins une couche de matière élastique compressible et une couche de revêtement de surface, caractérisée en ce que la planche de bord comprend au moins une piqûre localisée du revêtement de sorte que la couche de revêtement de surface soit déformée par au moins un ourlet traversé par cette piqûre.

L'invention sera mieux comprise, grâce à la description ci-après, qui se rapporte aux modes de réalisation préférés, donnés à titre d'exemples non limitatifs, et expliqués avec référence aux dessins schématiques annexés, dans lesquels :

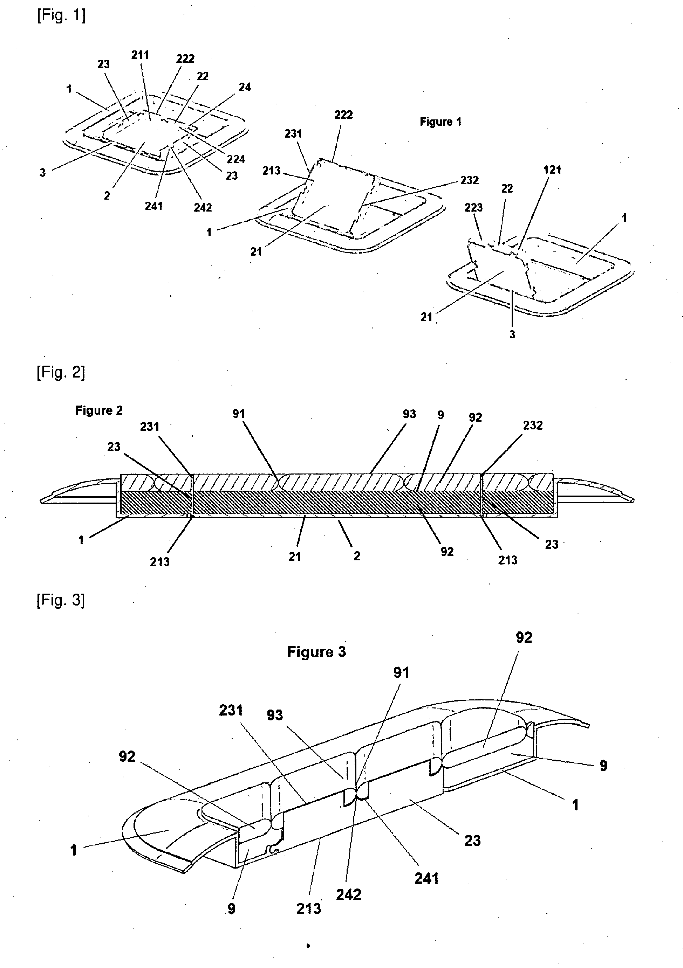

[Fig. 1] est une illustration schématique d'un exemple de cinématique d'ouverture de structure support rigide pour une planche de bord selon l'invention,
[Fig. 2] est une illustration schématique d'un exemple de vue en section d'un exemple de planche de bord selon l'invention,
[Fig. 3] est une illustration schématique d'un exemple d'une vue en section passant dans le plan d'une paroi latérale de la structure support rigide pour un exemple de planche de bord selon l'invention.

L'invention concerne une structure support rigide 1 pour planche de bord intégrant au moins un volet 2 d'airbag, cette structure support 1 étant configurée pour porter un revêtement 9, caractérisée en ce que le au moins un volet 2 d'airbag comprend :
- un panneau support 21 configuré pour porter une partie du revêtement 9 de la planche de bord et relié, directement ou indirectement, au reste de la structure support 1 par au moins un moyen charnière 3,
- une paroi de connexion 22 positionnée le long d'au moins une portion du bord 211 du panneau support 21 situé à l'opposé du moyen charnière 3 par rapport au panneau support 21 et configurée, d'une part, pour interagir avec une surface d'épaisseur 13 de la planche de bord positionnée en vis-à-vis de la paroi de connexion 22 et, d'autre part, pour opérer une séparation entre une épaisseur du revêtement 9 de la planche de bord porté par le panneau support 21 et une épaisseur du revêtement 9 porté par le reste de la structure support 1,
le bord libre 222 de la paroi de connexion 22 opposé au panneau support 21 étant configuré pour être en profondeur par rapport à la surface de la couche de revêtement 9, la paroi de connexion 22 présente une variation de sa hauteur de sorte que au moins une portion du bord libre 222 de la paroi de connexion 22 réalise un arrangement formant une ouverture 24 au travers de la paroi de connexion 22, cette ouverture 24 étant configurée pour y permettre le positionnement d'une déformation au moins localisée de la couche de revêtement de surface 93 de la planche de bord en lien avec une piqûre 91 ou une couture.

La structure support rigide 1 pour planche de bord de l'invention fait ainsi intervenir un volet 2 d'airbag réalisé sous la forme d'un panneau 21 arrangé pour supporter une partie du revêtement 9 de la planche de bord 1 et dont une partie de son bord 211 comprend une paroi de connexion 22 configurée pour coopérer avec une surface de la planche de bord disposée en vis-à-vis de cette paroi de connexion 22. Alors que le panneau support 21 du volet 2 est disposé selon un arrangement sensiblement plan et parallèle à la disposition du revêtement 9 porté, la paroi de connexion 22 du volet 2 est disposée selon un arrangement sensiblement plan comprenant au moins une composante disposée en section par rapport à l'épaisseur du revêtement 9. Selon cet arrangement, la paroi de connexion 22 est disposée à l'intérieur d'une partie de l'épaisseur du revêtement 9 et en particulier à l'intérieur de la partie de l'épaisseur du revêtement 9 la plus proche et au contact avec la surface de la structure support rigide 1 de la planche de bord. Classiquement, cette paroi de connexion 22 présente une épaisseur similaire à l'épaisseur du panneau support 21 de sorte que la paroi de connexion 22 présente une forme aplatie similaire à celle d'une lame. De façon préférée, cette paroi de connexion 22 présente une épaisseur inférieure, voire légèrement inférieure, à l'épaisseur du panneau support 21. Cette paroi de connexion 22 comprend au moins un bord libre 222 positionné à distance du panneau support 21 du volet 2. La paroi de connexion 22 et son bord libre 222 positionnés dans l'épaisseur du revêtement 9 se trouvent alors masqués par la portion du revêtement 9 située à proximité, voire au niveau, de la surface de la planche de bord.

Dans la planche de bord selon l'invention, la paroi de connexion 22 du volet 2 est disposée en travers d'une portion de l'épaisseur du revêtement 12 qui recouvre la surface de la structure support 1 de la planche de bord. Cette paroi de connexion 22 du volet 2 présente ainsi un arrangement sensiblement plan et polygonal qui comprend au moins un bord confondu avec le bord 121 du panneau support 21 du volet 2. Les surfaces respectives de la paroi de connexion 22 du volet 2 se trouvent alors disposées, directement ou indirectement, en contact avec au moins une partie de l'épaisseur du revêtement 9. Selon un exemple de construction préféré, la surface 224 de la paroi de connexion 22 orientée du côté du volet 2 est en contact direct avec le revêtement 9 porté par le panneau support 21. La surface 223 de la paroi de connexion 22 orientée du côté opposé au volet 2 est positionnée en vis-à-vis de l'épaisseur du revêtement 9 porté par la structure support 1 pour coopérer, directement ou indirectement, avec celle-ci. Cette épaisseur du revêtement 9 porté par la structure support 1 et non par le panneau support 21 du volet 2, réalise une surface d'épaisseur 13 destinée à coopérer, directement ou indirectement, avec la paroi de connexion 22 du volet 2. De façon préférée, cette surface d'épaisseur 13 est disposée dans un plan sensiblement parallèle au plan de positionnement de la paroi de connexion 22 du volet 2 lorsque le volet 2 est en position d'obturation du canal d'airbag 4. De même, de façon préférée, cette surface d'épaisseur 13 est disposée de façon à être sensiblement positionnée dans la continuité d'au moins une partie de la surface intérieure du canal d'airbag 4. La coopération, directe ou indirecte, entre la surface d'épaisseur 13 et la paroi de connexion 22 du volet 2 positionnée en vis-à-vis est configurée pour maintenir, en absence de déploiement du coussin d'airbag, le volet 2 en position de fermeture du canal d'airbag 4, de façon à assurer une homogénéité de la surface de la planche de bord visible par un passager de l'habitacle.

La paroi de connexion 22 du volet 2 présente également une hauteur qui varie sur sa longueur. Toutefois, au moins une portion d'un bord libre 222 de cette paroi de connexion 22 formant également la au moins une portion du bord libre 222 la plus à distance du panneau support 21 du volet 2, bien qu'étant disposée en profondeur de la surface de la couche de revêtement 9, est positionnée à proximité et à faible distance de la surface de la planche de bord tout en étant recouverte par le revêtement 9. La paroi de connexion 22 disposée dans l'épaisseur du revêtement 9 opère une séparation entre, d'une part, une partie du revêtement 9 portée par le panneau support 21 et, d'autre part, une partie du revêtement 9 portée par le reste de la structure support 1 de la planche de bord. Cette séparation permet ainsi d'imposer un découpage préalable d'une partie du revêtement 9 au niveau d'une partie de la jonction entre le volet 2 et le reste de la structure support de la planche de bord de sorte que, lors du déploiement du coussin d'airbag, la portion d'épaisseur du revêtement 9 destinée à être déchirée ou sectionnée s'en trouve réduite. De plus, le bord libre 222 de la paroi de connexion 22 disposé à l'intérieur de l'épaisseur du revêtement 9 et situé à distance du panneau support 21 du volet 2, est arrangé pour être masqué par au moins une partie de la surface du revêtement 9. Compte tenu de la forme aplatie de la paroi de connexion 22, ce bord libre 222 réalise ainsi un arrangement sensiblement similaire à celui du tranchant ou du fil d'une lame apte, sous l'effet d'un effort du volet 2 en pivotement ou en bascule, à déchirer, voire à sectionner ou couper, efficacement le revêtement 9 qui recouvre ce bord libre 222 de la paroi de connexion 22 du volet 2.

Dans le cadre de l'invention, la paroi de connexion 22 réalise une séparation au moins partielle entre deux portions de l'épaisseur du revêtement 9 à savoir, d'une part, une partie du revêtement 9 portée par le panneau support 21 et, d'autre part, une partie du revêtement 9 portée par le reste de la structure support 1 de la planche de bord. Le bord libre 222 de cette paroi de connexion 22 présente ainsi une variation de la hauteur de sa position par rapport au bord opposé de la paroi de connexion 22 formé par le bord 211 du panneau support 21 qui porte cette paroi de connexion 22. Cette variation de la hauteur du bord libre 222 le long de la paroi de connexion 22 participe à la réalisation d'au moins une ouverture 24 au travers de la paroi de connexion 22. Cette au moins une ouverture 24 est formée par une portion du bord libre 222 de la paroi de connexion 22 au niveau de laquelle la hauteur du bord libre 222 est moins importante. Une telle construction permet la réalisation d'une partie strictement localisée et ponctuelle de la paroi de connexion 22 au niveau de laquelle le relief de la surface de la structure support rigide 1 de la planche de bord est restreint en hauteur par rapport à la surface du panneau support 21 du volet 2, de façon à être adapté au positionnement d'un arrangement particulier du revêtement 9. Selon cet arrangement particulier, la surface du revêtement 9 et plus particulièrement la couche de revêtement de surface 93, présente une invagination de la surface dans la profondeur de l'épaisseur du revêtement, comme dans le cadre de la réalisation d'un capiton. La variation de la hauteur du bord libre 222 le long de la paroi de connexion 22 permet ainsi la réalisation d'une paroi de connexion 22 dont le bord libre 222 est adapté à au moins une variation ponctuelle et/ou localisée de la couche de revêtement de surface 93 tout en demeurant recouvert par la surface de ce revêtement 9. Par cette variation de hauteur, le bord libre 222 de la paroi de connexion est en mesure d'être positionné à proximité et à faible distance de la surface du revêtement 9 de la planche de bord, et plus particulièrement de la couche de revêtement de surface 93, de façon à être en mesure d'opérer une déchirure ou un sectionnement efficace de la partie du revêtement 9 qui recouvre ce bord libre 222 sous l'effet d'un effort du volet 2 en pivotement ou en bascule, lors du déploiement du coussin d'airbag. Il convient de relever que la paroi de connexion 22 est susceptible de comprendre plusieurs ouvertures 24 formées par différentes variations de la hauteur du bord libre 222 de cette paroi de connexion 22. Chacune de ces ouvertures 24 est alors configurée pour permettre le positionnement d'une variation ponctuelle et/ou localisée respective de la surface du revêtement 9 de la planche de bord, en lien avec une piqûre, et plus particulièrement de la couche de revêtement de surface 93, tout en demeurant recouvert par la surface de ce revêtement 9.

Selon un exemple se rapportant à une variante de construction de la structure de support 1 selon l'invention, la paroi de connexion 22 est prolongée par des parois latérales 23 respectivement positionnées le long d'au moins une portion de chacun des bords latéraux 213 du panneau support 21 situés de part et d'autre du bord 211 du panneau support 21 associé à la paroi de connexion 22. Selon cette variante de construction, chacune des parois latérales 23 présente un arrangement sensiblement plan avec une épaisseur de paroi sensiblement similaire à celle de la paroi de connexion 22. De façon similaire à la paroi de connexion 22, chacune des parois latérales 23 présente un bord libre 231, 232 respectif dont la hauteur varie le long de ces parois 23 par rapport au bord latéral 213 respectif du panneau support 21 qui porte cette paroi latérale 23. Cette variation de la hauteur des bords libres 231, 232 le long de ces parois latérales 23 participe à la réalisation d'une ou de plusieurs ouvertures 24 au travers de ces parois latérales 23. La jonction entre chacune de ces parois latérales 23 et la paroi de connexion 22 réalise un angle similaire à l'angle que réalisent, entre eux, les bords 211, 213 du panneau support 21 qui portent ces parois latérales 23 et la paroi de connexion 22. Dans le cadre de cette variante de construction, chacune de ces parois latérales 23 est respectivement disposée selon un arrangement sensiblement plan comprenant au moins une composante disposée en section par rapport au revêtement 9. Chacune de ces parois latérales 23 se trouve ainsi positionnée au sein d'une partie de l'épaisseur du revêtement 9 et en particulier au niveau d'une partie de l'épaisseur du revêtement 9 qui est au contact avec la surface de la structure support 1 de la planche de bord. Cette partie de l'épaisseur du revêtement 9 réalise ainsi une surface d'épaisseur 13 de la planche de bord en vis-à-vis de laquelle une surface de la paroi latérale 23 se trouve ainsi positionnée. Chacune de ces parois latérales 23 comprend un bord libre 231, 232 disposé à l'intérieur de l'épaisseur du revêtement 12 et situé à distance du panneau support 21 du volet 2. De façon préférée, chacun de ces bords libres 231, 232 présente une extrémité positionnée de niveau avec l'extrémité du bord libre 222 de la paroi de connexion 22 avec laquelle la paroi latérale 23 est en jonction avec la paroi de connexion 22. Les bords libres 222, 231, 232 des parois latérales 23 et de la paroi de connexion 22 présentent ainsi une continuité entre eux au niveau de la jonction entre les parois latérales 23 et la paroi de connexion 22.

Selon un exemple se rapportant à une autre variante de construction de la structure support 1 selon l'invention et susceptible d'être combinée avec la variante précédemment détaillée, le bord libre 231, 232 d'au moins une des parois latérales 23 opposé au panneau support 21 étant également configuré pour être masqué par au moins une partie du revêtement 9 située au niveau de la surface de ce revêtement 9 de la planche de bord, la au moins une des parois latérales 23 présente une variation de sa hauteur de sorte que au moins une portion du bord libre 231, 232 de cette au moins une des parois latérales 23 réalise un arrangement formant une ouverture 24 au travers de la au moins une des parois latérales 23, cette ouverture 24 étant configurée pour y permettre le positionnement d'une surépaisseur au moins localisée de la couche de revêtement de surface 93 en raison de la présence d'un ourlet au niveau d'une piqûre 91 ou d'une couture. En effet, la jonction de deux portions juxtaposées de la couche de revêtement de surface 93 par une couture est réalisée plus particulièrement par des ourlets respectivement formés au niveau des bords respectifs de ces portions juxtaposées de la couche de revêtement de surface 93 et positionnés en vis-à-vis l'un de l'autre pour être solidarisés par une piqûre 91 ou une couture. Chacun de ces ourlets réalise ainsi localement au moins un doublement de l'épaisseur de la couche de revêtement de surface 93. De façon similaire au bord libre 222 de la paroi de connexion 22, les bords libres 231, 232 respectifs de chacune des parois latérales 23 sont arrangés pour être masqués par au moins une partie de la couche de revêtement 9 située au niveau de la surface de ce revêtement 9 de la planche de bord. De façon similaire à la paroi de connexion 22, compte tenu de la forme aplatie des parois latérales 23, les bords libres 231, 232 sont également configurés pour fonctionner d'une façon similaire à celle d'un tranchant ou d'un fil d'une lame qui, sous l'effet d'un effort du volet 2 en pivotement ou en bascule, est en mesure de déchirer, voire sectionner ou couper, efficacement le revêtement 12 disposé par-dessus les bords libres 231, 232 respectifs des parois latérales 23 du volet 2.

Selon un exemple se rapportant à une autre variante de construction de la structure support rigide 1 selon l'invention et susceptible d'être combinée avec l'une ou l'autre des variantes précédemment détaillées, la paroi de connexion 22 et/ou au moins une des parois latérales 23 est disposée dans un plan respectif sensiblement perpendiculaire au plan du panneau support 21. Dans le cadre de cet exemple de construction, l'orientation de la paroi de connexion 22 et/ou de la au moins une paroi latérale 23 est disposée de façon à positionner la paroi de connexion 22 et/ou la au moins une paroi latérale 23 à l'intérieur de l'épaisseur du revêtement 9 selon une orientation optimisée pour sectionner ou déchirer, voire à sectionner ou couper, efficacement la partie du revêtement 9 qui recouvre le bord libre 222, 231, 232 de la paroi de connexion. 22 et/ou de la au moins une paroi latérale 23 du volet 2 lors du pivotement ou de la bascule du volet 2. Par ailleurs, lorsque les parois latérales 23 sont disposées dans des plans respectifs sensiblement parallèles entre eux et perpendiculaires au plan moyen de la paroi de connexion 22, l'ensemble formé par les deux parois latérales 23 et la paroi de connexion 22 se trouve alors disposé le long de différents bords 211, 213 d'un panneau support 21 du volet 2 qui présente une forme sensiblement rectangulaire.

Selon un exemple se rapportant à une autre variante de construction de la structure support rigide 1 selon l'invention et susceptible d'être combinée avec l'une ou l'autre des variantes précédemment détaillées, la au moins une portion du bord libre 222, 231, 232 qui forme une ouverture 24 au travers de la paroi de connexion 22 et/ou d'au moins une des parois latérales 23 présente un arrangement concave. Dans le cadre de cet exemple de construction, la concavité réalisée par les bords libres 222, 231, 232 réalise la au moins une ouverture 24 adaptée pour permettre le positionnement d'une portion invaginée de la surface du revêtement 9 réalisée par un point de piqûre 91 aligné avec la paroi de connexion 22 ou l'une des parois latérales 23. Selon un exemple se rapportant à une variante spécifique de construction de cette variante, la concavité de l'ouverture 24 comprend une portion convexe réalisée par la réunion de deux portions courbées et concaves du bord libre 222, 231, 232 qui participent à la formation de cette ouverture 24, de façon à présenter une forme sensiblement complémentaire d'une surépaisseur localisée de la couche de revêtement de surface 93 en raison de la présence d'un ourlet au niveau d'une piqûre 91 ou d'une couture. En effet, la jonction de deux portions juxtaposées de la couche de revêtement de surface 93 par une couture est réalisée plus particulièrement par des ourlets respectivement formés au niveau des bords respectifs de ces portions juxtaposées de la couche de revêtement de surface 93 et positionnés en vis-à-vis l'un de l'autre pour être solidarisés par une piqûre 91 ou une couture. Chacun de ces ourlets réalise ainsi localement au moins un doublement de l'épaisseur de la couche de revêtement de surface 93. Une portion de chaque ourlet de la couche de revêtement de surface 93 est alors positionnée entre la piqûre 91 ou couture et la couche de matière élastique compressible 92. La déformation de cet ourlet est alors complémentaire d'au moins une partie de la concavité du bord libre 222, 231, 232 qui forme cette ouverture 24. La jonction de deux ourlets conduit, dans un plan vertical en section, à la formation de deux portions en surépaisseur de la couche de revêtement de surface 93 présentant des déformations convexes. La portion convexe réalisée par réunion de deux portions courbées et concaves du bord libre 222, 231, 232 d'une ouverture 24 est ainsi en mesure d'être adaptée pour présenter une forme sensiblement complémentaire à celle de la déformation supportée par la surface de la couche de revêtement de surface 93 au niveau de la jonction entre les ourlets de deux portions juxtaposées de cette couche de revêtement de surface 93 et disposée en vis-à-vis de la structure support 1 au niveau d'un point de piqûre 91 du revêtement 9. Cette construction particulière d'une cavité 24 par le bord libre 222, 231, 232 d'une paroi 22, 23 permet ainsi d'opérer un positionnement du bord libre 222, 231, 232 de la paroi de connexion 22 et/ou d'une des parois latérales 23 au niveau d'un point de déformation de cette surface qui soit situé au plus près de la surface du revêtement 9 de la planche de bord. Un tel positionnement facilite l'efficacité de la déchirure ou du sectionnement de la partie du revêtement 9, et plus particulièrement de la partie de la couche de revêtement de surface 93, en couverture de ce bord libre 222, 231, 232 sous l'effet d'un effort exercé par le volet 2 en pivotement ou en bascule, lors du déploiement du coussin d'airbag.

Selon un exemple se rapportant à une autre variante de construction de la structure support rigide 1 selon l'invention et susceptible d'être combinée avec l'une ou l'autre des variantes précédemment détaillées, au moins une portion du bord libre 222, 231, 232 de la paroi de connexion 22 et/ou de au moins une des parois latérales 23 présente un arrangement symétrique par rapport à un plan perpendiculaire au plan de la paroi 22, 23 qui porte cet arrangement. De façon préférée, cette construction symétrique est positionnée au niveau d'une cavité 24 de la paroi 22, 23 qui porte cet arrangement. Le plan de symétrie de l'arrangement est alors préférentiellement orienté de façon perpendiculaire, d'une part, à la paroi 22, 23 qui porte cet arrangement et, d'autre part, au plan moyen du panneau support 21 du volet 2 d'airbag. Ce plan de symétrie opère une division en deux parties de la au moins une portion du bord libre 222, 231, 232 qui forme une cavité 24 traversante d'une paroi 22, 23 de sorte que la cavité 24 présente une forme adaptée de façon optimale à la surface de la couche de revêtement de surface 93 disposée en vis-à-vis de la structure support 1 et qui est également déformée par la présence d'ourlets au niveau de la piqûre 91 ou couture. La construction symétrique particulière d'une cavité 24 de paroi 22, 23 dans le cadre de l'invention permet ainsi d'opérer un positionnement optimisé du bord libre 222, 231, 232 de la paroi de connexion 22 et/ou d'une des parois latérales 23 par rapport à la déformation qu'imposent des ourlets similaires de portions juxtaposées de la couche de revêtement de surface 93 au niveau de leur jonction par une piqûre 91 ou couture. Ce positionnement optimal permet ainsi la réalisation d'une déchirure ou d'un sectionnement efficace de la partie du revêtement 9, et plus particulièrement de la partie de la couche de revêtement de surface 93, en couverture de ce bord libre 222, 231, 232 sous l'effet d'un effort exercé par le volet 2 en pivotement ou en bascule, lors du déploiement du coussin d'airbag.

Selon un exemple se rapportant à une autre variante de construction de la structure support rigide 1 selon l'invention et susceptible d'être combinée avec la variante précédemment détaillée, la au moins une portion du bord libre 222, 231, 232 de la paroi de connexion 22 et/ou de au moins une des parois latérales 23 dont l'arrangement réalise une ouverture 24 comprend une partie symétrique qui présente la forme de deux courbures 241 réunies au niveau d'un plan de symétrie. Selon cette variante de construction, chacune des courbures 241 réalisées par des portions du bord libre 222, 231, 232 de la paroi 22, 23 qui porte l'ouverture 24 est adaptée pour être complémentaire d'une partie en section de la déformation supportée par la couche de revêtement de surface 93 disposée en vis-à-vis de la structure support 1 et consécutive d'ourlets pour la jonction par une piqûre 91 ou couture de deux portions juxtaposées de la couche de revêtement de surface 93. La couche de revêtement de surface 93 présente ainsi, dans un plan en section, la forme d'une paire de courbures convexes distinctes et réunies au niveau de la piqûre 91 dans l'épaisseur du revêtement 9. Dans le cadre de la planche de bord selon cette variante de construction, les courbures 241 du bord libre 222, 231, 232 de la cavité 24 portée par la paroi 22, 23 du volet 2 présentent des concavités respectives et se rejoignent au niveau d'un point de jonction 242 confondu avec le plan de symétrie de la cavité 24. De plus, ce point de jonction 242 est également arrangé pour être sensiblement aligné sur l'axe de l'épaisseur du revêtement passant par le point de piqûre 91 qui réunit les ourlets des portions juxtaposées de la couche de revêtement de surface 93.

L'invention concerne également une planche de bord intégrant au moins un volet 2 d'airbag, la planche de bord comprenant, d'une part, une structure support rigide 1 selon l'invention et, d'autre part, un revêtement 9 superposé sur cette structure support 1, le revêtement 9 comprenant au moins une couche de matière élastique compressible 92 et une couche de revêtement de surface 93, caractérisée en ce que la planche de bord comprend au moins une piqûre 91 localisée du revêtement 9 de sorte que le revêtement 9 soit pincé et que l'épaisseur du revêtement 9 soit réduite au point de cette piqûre 91. La réduction localisée de l'épaisseur du revêtement 9 au niveau du point de piqûre 91 permet la réalisation d'une déformation de la surface du revêtement 9 et la réalisation d'un capitonnage. Dans le cadre de la construction de la planche de bord, la piqûre 91 est arrangée pour traverser à la fois au moins une couche de matière élastique compressible 92 et la couche de revêtement de surface 93 pour pincer conjointement ces au moins deux couches 92, 93 du revêtement 9 selon un axe essentiellement orienté selon l'axe de l'épaisseur de ce revêtement 9. Il convient de relever que la matière élastique compressible du revêtement 9 est susceptible d'être réalisée sous la forme d'une seule ou de plusieurs couches 92 superposées. Aussi, la piqûre 91 est susceptible de traverser l'ensemble des différentes couches 92, 93 qui constituent le revêtement 9 de la planche de bord ou, alternativement, de traverser la couche de revêtement de surface 93 et une ou plusieurs des couches de matière élastique compressible 92 situées au plus près de la couche de revêtement de surface 93 de sorte qu'au moins une couche de matière élastique compressible 92 située au plus près de la structure support 1 ou du panneau support 21 du volet 2 n'est pas traversée ni pincée par la piqûre 91. Cette piqûre 91 est susceptible d'être réalisée sous la forme d'un moyen qui traverse et resserre ponctuellement entre elles l'ensemble des couches 91, 92 du revêtement 9, voire alternativement lorsque le revêtement 9 comprend plus de trois couches, plusieurs des couches superposées et positionnées de côté de la surface du revêtement 9. Le moyen qui traverse les couches 91, 92 du revêtement 9 est susceptible d'être réalisé sous la forme d'un fil ou d'un cordage de couture ou alternativement par une pièce ou un ensemble de pièces qui coopèrent pour fonctionner comme un rivet ou mécanisme de rivetage.

Selon un exemple se rapportant à une variante de construction de la planche de bord selon l'invention et susceptible d'être combinée avec la variante précédemment détaillée, le revêtement 9 comprend au moins une piqûre 91 positionnée au niveau d'un arrangement formant une ouverture 24 de la au moins une portion du bord libre 222 de la paroi de connexion 22 et/ou de la au moins une portion du bord libre 223 de au moins une des parois latérales 23.

Selon un exemple se rapportant à une variante de construction de la planche de bord selon l'invention et susceptible d'être combinée avec l'une ou l'autre des variantes précédemment détaillées, le revêtement 9 comprend au moins une ligne de couture disposée entre au moins deux piqûres 91 du revêtement 9. Selon cette variante de construction, la ligne de couture qui opère une jonction entre deux piqûres 91 successives sur le revêtement 9 permet la réalisation de points de piqûres 91 avec un même moyen, par exemple un même fil de couture. L'utilisation de ce même moyen pour réaliser deux points de piqûres 91 juxtaposés et la ligne de couture qui les lie correspond ainsi à une continuité de matière entre ces piqûres 91 et la couture intermédiaire de sorte que, dans le cadre d'une production, un tel arrangement ne nécessitant pas l'utilisation d'un nouveau moyen pour la réalisation de chaque piqûre 91, permet alors une production facilitée.

Selon un exemple se rapportant à une variante de construction de la planche de bord selon l'invention et susceptible d'être combinée avec l'une ou l'autre des variantes précédemment détaillées, le revêtement 9 comprend au moins une ligne de piqûres 91 du revêtement 9. Selon cette variante de construction, la au moins une ligne de piqûres 91 formée par un alignement de plusieurs piqûres 91 juxtaposées et suffisamment rapprochées de façon à limiter les variations d'épaisseur du revêtement 9 entre deux points de piqûres 91 successifs permet la réalisation d'un relief sensiblement rainuré au niveau de la surface du revêtement 9.

Selon un exemple se rapportant à une variante de construction de la planche de bord selon l'invention et susceptible d'être combinée avec la variante précédemment détaillée, la ligne de piqûres 91 présente une discontinuité de sorte que cette discontinuité présente au moins une rupture de continuité localisée au niveau de l'ouverture du volet 2 et plus particulièrement au niveau d'une intersection des projections sur la structure support rigide 1, d'une part, de la ligne de piqûres 91 et, d'autre part, de la paroi de connexion 22 ou d'une paroi latérale 23. Dans le cadre de cette variante de construction, la ligne de piqûres 91 est réalisée par des piqûres 91 juxtaposées tout en demeurant écartées entre elles. Cette ligne de piqûres 91 discontinue permet ainsi la présence d'un espace entre deux piqûres 91 juxtaposées qui soit superposé avec une paroi, de connexion 22 ou latérale 23, du volet 2. Cet espace entre deux piqûres 91 juxtaposées est également susceptible d'être superposé avec une ouverture 24 portée par l'une ou l'autre de ces parois 22, 23. En effet, la déformation de la couche de revêtement de surface 93 générée par un ourlet au niveau d'une piqûre 91 ou couture est effective au niveau d'une portion du revêtement 9 qui rayonne autour de cette piqûre 91. Aussi, le positionnement d'un espace entre deux piqûres 91 ou coutures juxtaposées en superposition avec une ouverture 24 portée par l'une ou l'autre de ces parois 22, 23 permet de réaliser un positionnement optimal du bord libre 222, 223 de la paroi 22, 23 par rapport à la couche de revêtement de surface 93 déformée pour demeurer masquée par cette couche de revêtement de surface 93 tout en étant en mesure d'opérer une déchirure efficace de la partie du revêtement 9, et plus particulièrement de la partie de la couche de revêtement de surface 93, en recouvrement du bord libre 222, 223 sous l'effet d'un effort du volet 2 en pivotement ou en bascule.

Selon un exemple se rapportant à une variante de construction de la planche de bord selon l'invention et susceptible d'être combinée avec l'une ou l'autre des variantes précédemment détaillées, d'une part, la couche de matière élastique compressible 92 du revêtement 9 est disposée de part et d'autre de la paroi de connexion 22 et/ou de part et d'autre d'au moins une des parois latérales 23 et, d'autre part, la couche de revêtement de surface 93 est disposée en recouvrement de la couche de matière élastique compressible 92, de la paroi de connexion 22 et/ou d'au moins une des parois latérales 23.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Structure support rigide (1) pour planche de bord intégrant au moins un volet (2) d'airbag, cette structure support (1) étant configurée pour porter un revêtement (9), **caractérisée en ce que** le au moins un volet (2) d'airbag comprend :
- un panneau support (21) configuré pour porter une partie du revêtement (9) de la planche de bord et relié, directement ou indirectement, au reste de la structure support (1) par au moins un moyen charnière (3),
- une paroi de connexion (22) positionnée le long d'au moins une portion du bord (211) du panneau support (21) situé à l'opposé du moyen charnière (3) par rapport au panneau support (21) et configurée, d'une part, pour interagir avec une surface d'épaisseur (13) de la planche de bord positionnée en vis-à-vis de la paroi de connexion (22) et, d'autre part, pour opérer une séparation entre une épaisseur du revêtement (9) de la planche de bord porté par le panneau support (21) et une épaisseur du revêtement (9) porté par le reste de la structure support (1),
le bord libre (222) de la paroi de connexion (22) opposé au panneau support (21) étant configuré pour être en profondeur par rapport à la surface de la couche de revêtement (9), la paroi de connexion (22) présente une variation de sa hauteur de sorte que au moins une portion du bord libre (222) de la paroi de connexion (22) réalise un arrangement formant une ouverture (24) au travers de la paroi de connexion (22), cette ouverture (24) étant configurée pour y permettre le positionnement d'une déformation au moins localisée de la couche de revêtement de surface (93) de la planche de bord en lien avec une piqûre (91) ou une couture.

2. Structure de support rigide (1) selon la revendication 1, **caractérisée en ce que** la paroi de connexion (22) est prolongée par des parois latérales (23) respectivement positionnées le long d'au moins une portion de chacun des bords latéraux (213) du panneau support (21) situés de part et d'autre du bord (211) du panneau support (21) associé à la paroi de connexion (22).

3. Structure de support rigide (1) selon la revendication 2, **caractérisée en ce que** le bord libre (231, 232) d'au moins une des parois latérales (23) opposé au panneau support (21) étant également configuré pour être masqué par au moins une partie du revêtement (9) située au niveau de la surface de ce revêtement (9) de la planche de bord, la au moins une des parois latérales (23) présente une variation de sa hauteur de sorte que au moins une portion du bord libre (231, 232) de cette au moins une des parois latérales (23) réalise un arrangement formant une ouverture (24) au travers de la au moins une des parois latérales (23), cette ouverture (24) étant configurée pour y permettre le positionnement d'une surépaisseur au moins localisée de la couche de revêtement de surface (93) de la planche de bord en raison de la présence d'un ourlet au niveau d'une piqûre (91) ou d'une couture.

4. Structure de support rigide (1) selon une des revendications précédentes, **caractérisée en ce que** la paroi de connexion (22) et/ou au moins une des parois latérales (23) est disposée dans un plan respectif sensiblement perpendiculaire au plan du panneau support (21).

5. Structure de support rigide (1) selon une des revendications précédentes, **caractérisée en ce que** la au moins une portion du bord libre (222, 231, 232) qui forme une ouverture (24) au travers de la paroi de connexion (22) et/ou d'au moins une des parois latérales (23) présente un arrangement concave.

6. Structure de support rigide (1) selon une des revendications précédentes, **caractérisée en ce que** au moins une portion du bord libre (222, 231, 232) de la paroi de connexion (22) et/ou de au moins une des parois latérales (23) présente un arrangement symétrique par rapport à un plan perpendiculaire au plan de la paroi (22, 23) qui porte cet arrangement.

7. Structure de support rigide (1) selon une des revendications précédentes, **caractérisée en ce que** la au moins une portion du bord libre (222, 231, 232) de la paroi de connexion (22) et/ou de au moins une des parois latérales (23) dont l'arrangement réalise une ouverture (24) comprend une partie symétrique qui présente la forme de deux courbures (241) réunies au niveau d'un plan de symétrie.

8. Planche de bord intégrant au moins un volet (2) d'airbag, la planche de bord comprenant, d'une part, une structure support rigide (1) selon une des revendications 1 à 7 et, d'autre part, un revêtement (9) superposé sur cette structure support (1), le revêtement (9) comprenant au moins une couche de matière élastique compressible (92) et une couche de revêtement de surface (93), **caractérisée en ce que** la planche de bord comprend au moins une piqûre (91) localisée du revêtement (9) de sorte que la couche de revêtement de surface (93) soit déformée par au moins un ourlet traversé par cette piqûre (91).

9. Planche de bord selon la revendication 8, **caractérisée en ce que** le revêtement (9) comprend au moins une piqûre (91) positionnée au niveau d'un arrangement formant une ouverture (24) de la au moins une portion du bord libre (222) de la paroi de connexion (22) et/ou de la au moins une portion du bord libre (223) de au moins une des parois latérales (23).

10. Planche de bord selon une des revendications 8 ou 9, **caractérisée en ce que** le revêtement (9) comprend au moins une ligne de couture disposée entre au moins deux piqûres (91) du revêtement (9).

11. Planche de bord selon une des revendications 8 ou 9, **caractérisée en ce que** le revêtement (9) comprend au moins une ligne de piqûres (91) du revêtement (9).

12. Planche de bord selon la revendication 11, **caractérisée en ce que** la ligne de piqûres (91) présente une discontinuité de sorte que cette discontinuité présente au moins une rupture de continuité localisée au niveau d'une intersection des projections sur la structure support rigide (1), d'une part, de la ligne de piqûres (91) et, d'autre part, de la paroi de connexion (22) ou d'une paroi latérale (23).

13. Planche de bord selon une des revendications 11 ou 12, **caractérisée en ce que**, d'une part, la couche de matière élastique compressible (92) du revêtement (9) est disposée de part et d'autre de la paroi de connexion (22) et/ou de part et d'autre d'au moins une des parois latérales (23) et **en ce que**, d'autre part, la couche de revêtement de surface (93) est disposée en recouvrement de la couche de matière élastique compressible (92), de la paroi de connexion (22) et/ou d'au moins une des parois latérales (23).
